# EUROPEAN PATENT APPLICATION

(11) **EP 3 998 468 A1**
(43) Date of publication of application: **18.05.2022**
(21) Application number: 20837222.7
(22) Date of filing: 17.06.2020
(51) Int. Cl.: G01N 1/02

(54) **ADHERED SUBSTANCE COLLECTION DEVICE AND ADHERED SUBSTANCE ANALYSIS SYSTEM**

(30) Priority: 11.07.2019 JP 2019129334
(71) Applicant: Hitachi, Ltd., Tokyo 100-8280 (JP)
(72) Inventor: KUMANO, Shun, Tokyo 100-8280 (JP); TAKADA, Yasuaki, Tokyo 100-8280 (JP); NOJIRI, Tatsuo, Tokyo 100-8280 (JP); NAGANO, Hisashi, Tokyo 100-8280 (JP); MIZUNO, Hiroki, Tokyo 100-8280 (JP); FUJII, Takayuki, Tokyo 100-8280 (JP)
(74) Representative: Strehl Schübel-Hopf & Partner
(86) International application number: PCT/JP2020/023832
(87) International publication number: WO 2021/005989

(57) **Abstract**

In order to stably collect an attached substance attached to an inspection object, a nozzle (111) configured to jet gas upward, an upper surface (105) equipped with an opening portion through which the gas is jetted, a collection opening through which the gas jetted toward an inspection object (C) is collected, and a contact detection sensor (130) configured to detect whether or not the inspection object (C) has come into contact with the upper surface (105) are included, an attached substance attached to the inspection object(C) is collected by using the gas, a height of a distal end of the nozzle (111) is substantially equal to a height of the upper surface (105); or equal to or less than a height of the upper surface (105), the upper surface (105) includes a recess portion (121), and, relative to a jet opening (112) of the nozzle (111), the recess portion (121) is closer to the collection opening, and is in contact with the jet opening (112) of the nozzle (111) or includes the jet opening (112) of the nozzle (111).

## Description

### Technical Field

The present invention relates to a technique of an attached substance collection device and an attached substance analysis system.

### Background Art

It is required in an engineering field and an environmental field to analyze a physical matter of an attached substance attached to an inspection object. In particular, in the environmental field, in order to grasp the state of environmental pollution, there is a demand for an analysis device that has high sensitivity and can quickly measure an attached substance in real time.

In addition, in an industrial field, for the purpose of production process control and quality control, there is a demand for an analysis device that has high sensitivity and can measure quickly or in real time an attached substance component attached to an industrial product.

For example, Patent Literature 1 discloses an analysis device and an analysis method where "Provided is a technique of analyzing particles in real time while collecting and condensing the particles continuously. Gas and/or particles as a detection target substance that are attached to an authentication target 2 are removed by air flow from a blowing region 5. The removed sample is sucked and is condensed and sampled at a sampling region 10, and ions of the sample are generated at an ion source 21 and are then subjected to mass analysis at a mass analysis region 23. Determination of the obtained mass spectrum is made as to the presence or not of a mass spectrum derived from the detection target substance, and a monitor 27 displays a result thereof. Thereby, the detection target substance attached to the authentication target 2 can be detected continuously in real time, promptly and with a less error rate".

Patent Literature 2 discloses an analysis apparatus "provided with: a recognition unit for recognizing an object; an air supply unit for jetting air streams onto the object from at least two different directions; a collection port for collecting gas and/or particles stripped from the object; an air intake unit for sucking in the gas and/or particles stripped from the object; a flow rate control unit for controlling the air stream jetting of the air supply unit and the sucking of the air intake unit; a particle capturing unit for concentrating and capturing a substance to be detected included in the sucked in gas and/or particles; an analysis unit for analyzing the substance to be detected, which is introduced from the particle capturing unit; and an analysis determination control unit for determining whether the substance to be detected is present on the basis of the result of the analysis of the analysis unit".

Patent Literature 3 discloses an accretion collection device and inspection system where "In order to detach substances stably from an object being inspected, this accretion collecting device is characterized in including: ejection openings (n) which eject gas; a housing (B) in which the ejection openings (n) are provided; and supporting portions (H) which are installed on a surface of the housing (B) in which the ejection openings (n) are provided, and which have a prescribed height. Further, the supporting portions (H) are characterized in comprising protrusion-shaped portions formed in the housing (B). In addition, the supporting portions (H) have a cuboid shape, and are installed in such a way that the distance therebetween decreases in the direction of a recovery opening which recovers substances that have been detached from the object being inspected (C) by the gas".

### Citation List

### Patent Literature

Patent Literature 1: WO 2012/063796
Patent Literature 2: WO 2016/027320
Patent Literature 3: WO 2017/209065

### Summary of Invention

### Technical Problem

In these attached substance analysis systems, the inspection object may block a nozzle through which gas jets. In particular, when the inspection object is a hand, unlike an ID card or the like, the shape is variable, and the nozzle tends to be blocked because of the weight. Since the distal end of the nozzle is generally sharp, it is not preferable that the finger and the distal end of the nozzle come into contact with each other. In addition, when the jet opening of the nozzle is blocked with a finger, the efficiency of detachment and collection of the attached substance by gas is deteriorated.

The present invention has been made in view of such background, and an object of the present invention is to stably collect an attached adhered substance attached to an inspection object.

### Solution to Problem

In order to solve the above-described problem, one means of the present invention includes: a nozzle that jets gas upward; a surface including an opening portion through which the gas jetted from the nozzle passes; a collection opening in which the gas jetted toward an object is collected; and a contact detection unit that detects whether or not the object has come into contact with the surface, in which an attached substance attached to the object is collected by using the gas.

Furthermore, another means of the present invention includes: a nozzle that jets gas upward; a surface equipped with an opening portion through which the gas jetted from the nozzle passes; and a collection opening through which the gas jetted toward an object is collected, in which an attached substance attached to the object is collected by using the gas, a height of a distal end of the nozzle is substantially equal to a height of the surface; or equal to or less than a height of the surface, the surface includes an air flow adjustment portion that is a recess portion or a hole portion, and, relative to a jet opening of the nozzle, the air flow adjustment portion is provided closer to the collection opening, and is in contact with a jet opening of the nozzle or includes a jet opening of the nozzle.

Other solutions will be described as appropriate in the embodiments.

### Advantageous Effects of Invention

According to the present invention, an attached substance attached to an inspection object is stably collected.

### Brief Description of Drawings

[FIG. 1A] FIG. 1A is a view (part 1) illustrating a configuration of an attached substance collection device according to a first embodiment.
[FIG. 1B] FIG. 1B is a view (part 2) illustrating the configuration of the attached substance collection device according to the first embodiment.
[FIG. 1C] FIG. 1C is a view (part 3) illustrating the configuration of the attached substance collection device according to the first embodiment.
[FIG. 2A] FIG. 2A is a view illustrating a flow of gas in a case where no recess portion is provided.
[FIG. 2B] FIG. 2B is a view illustrating a flow of gas in a case where a recess portion is provided.
[FIG. 3] FIG. 3 is a view illustrating a configuration of an attached substance analysis system according to the first embodiment.
[FIG. 4] FIG. 4 is a view illustrating a configuration example of a data processing device according to the first embodiment.
[FIG. 5] FIG. 5 is a flowchart illustrating a procedure of gas jet processing in the first embodiment.
[FIG. 6] FIG. 6 is a view (part 1) illustrating a timing chart of gas jet.
[FIG. 7] FIG. 7 is a view (part 2) illustrating the timing chart of gas jet.
[FIG. 8] FIG. 8 is a view (part 3) illustrating the timing chart of gas jet.
[FIG. 9] FIG. 9 is a view illustrating a signal obtained in an experiment using a card to which a plastic explosive is attached as an inspection object.
[FIG. 10] FIG. 10 is a flowchart illustrating a processing procedure of the attached substance analysis system according to the first embodiment.
[FIG. 11] FIG. 11 is a view illustrating a configuration of an attached substance collection device according to a second embodiment.
[FIG. 12] FIG. 12 is a view illustrating a configuration of a data processing device according to the second embodiment.
[FIG. 13] FIG. 13 is a flowchart illustrating a processing procedure of the attached substance analysis system according to the second embodiment.
[FIG. 14A] FIG. 14A is a view (part 1) illustrating a configuration of an attached substance collection device according to a third embodiment.
[FIG. 14B] FIG. 14B is a view (part 2) illustrating the configuration of the attached substance collection device according to the third embodiment.
[FIG. 14C] FIG. 14C is a view (part 3) illustrating the configuration of the attached substance collection device according to the third embodiment.
[FIG. 15] FIG. 15 is a view illustrating a configuration of an attached substance collection device according to a fourth embodiment.
[FIG. 16A] FIG. 16A is a view (part 1) illustrating a configuration of an attached substance collection device according to a fifth embodiment.
[FIG. 16B] FIG. 16B is a view (part 2) illustrating the configuration of the attached substance collection device according to the fifth embodiment.
[FIG. 17] FIG. 17 is a view illustrating a configuration of an attached substance collection device according to a sixth embodiment.
[FIG. 18A] FIG. 18A is a view (part 1) illustrating a configuration of an attached substance collection device according to a seventh embodiment.
[FIG. 18B] FIG. 18B is a view (part 2) illustrating the configuration of the attached substance collection device according to the seventh embodiment.
[FIG. 19] FIG. 19 is a view illustrating a configuration of an attached substance collection device according to an eighth embodiment.
[FIG. 20] FIG. 20 is a view illustrating a configuration of an attached substance collection device according to a ninth embodiment.
[FIG. 21] FIG. 21 is a view illustrating a configuration of an attached substance collection device according to a tenth embodiment.

### Description of Embodiments

Embodiments of the present invention will be described below with reference to the accompanying drawings. Note that although the accompanying drawings illustrate specific embodiments in accordance with the principle of the present disclosure, these are for the purpose of understanding of the present invention and are by no means used for construing the present disclosure in a limited manner. Modifications by combination or replacement of the embodiments below with known techniques are also included in the scope of the present invention. It is possible to replace a part of the configuration of a certain embodiment with the configuration of another embodiment, and it is also possible to add the configuration of another embodiment to the configuration of a certain embodiment. Note that in all the drawings for describing the embodiments, components having the same functions are denoted by the same reference signs, and the repeated description thereof will be omitted.

### [First embodiment]

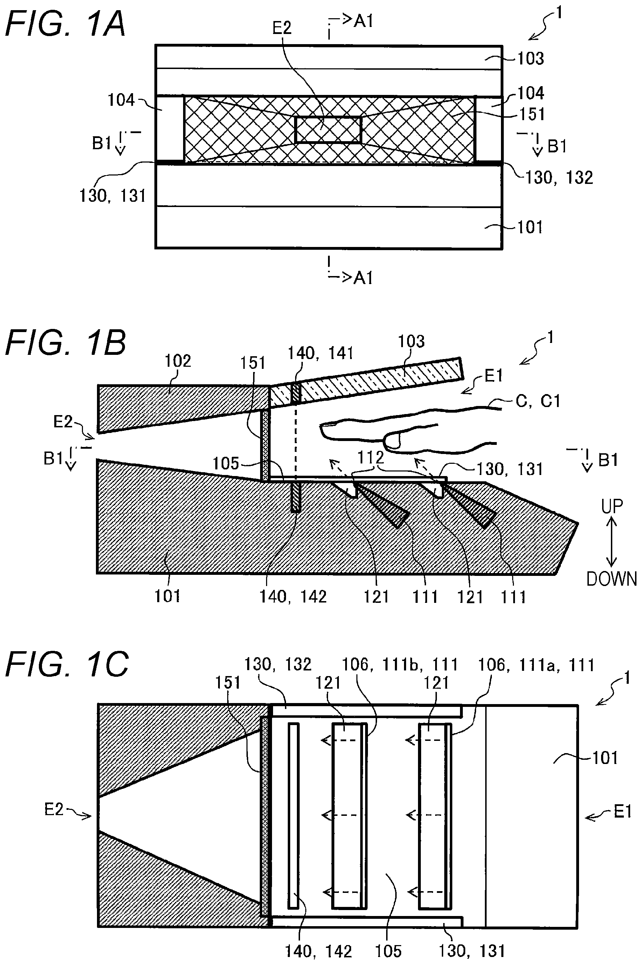

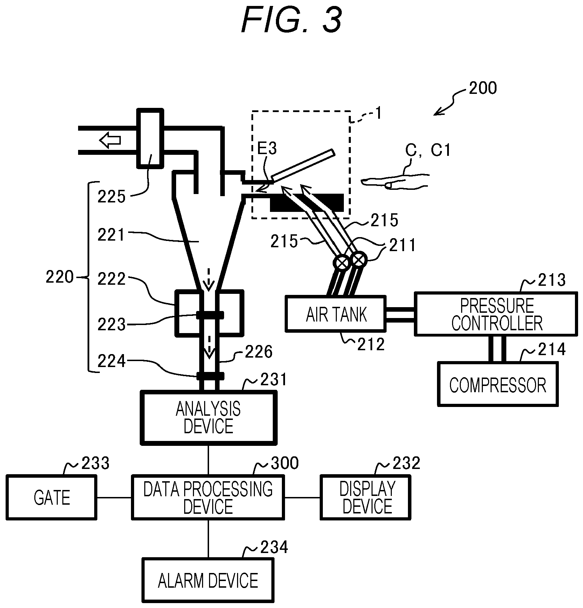

First, an outline of an attached substance analysis system 200 according to the present embodiment will be described with reference to FIGS. 1A through 1C and 3.

In order to collect an attached substance attached to an inspection object C, the attached substance analysis system 200 of the present embodiment jets gas from a jet opening 112 of a nozzle 111 to detach and collect the attached substance of the inspection object C when the inspection object C is inserted into an attached substance collection device 1. In order to check whether or not a person to be inspected possesses a dangerous material or a trace thereof, the attached substance analysis system 200, as a security gate system at an entrance of an important facility or the like, has a function of analyzing, in real time, whether or not the attached substance attached to the inspection object C is a dangerous material such as an explosive. Note that the following embodiments may also be applied to a security gate installed at an entrance of an important facility and the like, a boarding gate at an airport, a port, and the like, a gate 233 at an automatic ticket gate, a baggage inspection station, and a checked-in baggage inspection station, an entrance/exit ticket gate of an amusement facility, and the like.

### (Configuration of attached substance collection device 1)

FIGS. 1A through 1C are views illustrating the configuration of the attached substance collection device 1 according to the first embodiment. FIG. 1A is a view of the attached substance collection device 1 as viewed from an insertion opening E1. FIG. 1B is an A1-A1 cross-sectional view of FIG. 1A. FIG. 1C is a B1-B1 cross-sectional view of FIGS. 1A and 1B.

The attached substance collection device 1 includes a lower substrate 101, an upper substrate 102 (see FIG. 1B), an upper cover 103, a nozzle 111, a recess portion 121, a contact detection sensor 130, an insertion detection sensor 140, and a 0-order filter 151. A portion of the lower substrate 101 corresponding to the upper substrate 102 and the upper substrate 102 form a housing.

In the attached substance collection device 1, the gas jetted from the nozzle 111 is applied to the inspection object C (a hand C1 is anticipated in FIG.1) inserted into the attached substance collection device 1 (dashed arrow in FIG. 1B). An attached substance attached to the inspection object C is detached from the inspection object C to which the gas is applied. The detached attached substance is directed toward a collection opening E2.

As illustrated in FIGS. 1A through 1C, the attached substance collection device 1 includes the lower substrate 101 positioned below the inspection object C having been inserted. As illustrated in FIGS. 1B and 1C, the lower substrate 101 equipped with the nozzle 111 that jets gas.

In the first embodiment, a slit nozzle in which the jet openings (distal end) 112 has a linear shape (band shape) is adopted as the nozzle 111 as illustrated in FIG. 1C. With such a slit nozzle, gas is applied to a wide area with respect to the lower surface of the inspection object C. As a result, the detachment effect of the attached substance is improved.

As illustrated in FIGS. 1B and 1C, here, two nozzles 111 are equipped, but one or three or more nozzles may be provided. Note that in the present embodiment, as illustrated in FIG. 1C, among the two nozzles 111, one of the nozzles, which is located closer to the insertion opening E1, is referred to as a first nozzle 111a properly. Similarly, the other nozzle 111, which is located closer to the collection opening E2, is referred to as a second nozzle 111b properly.

### (Distal end position of nozzle 111)

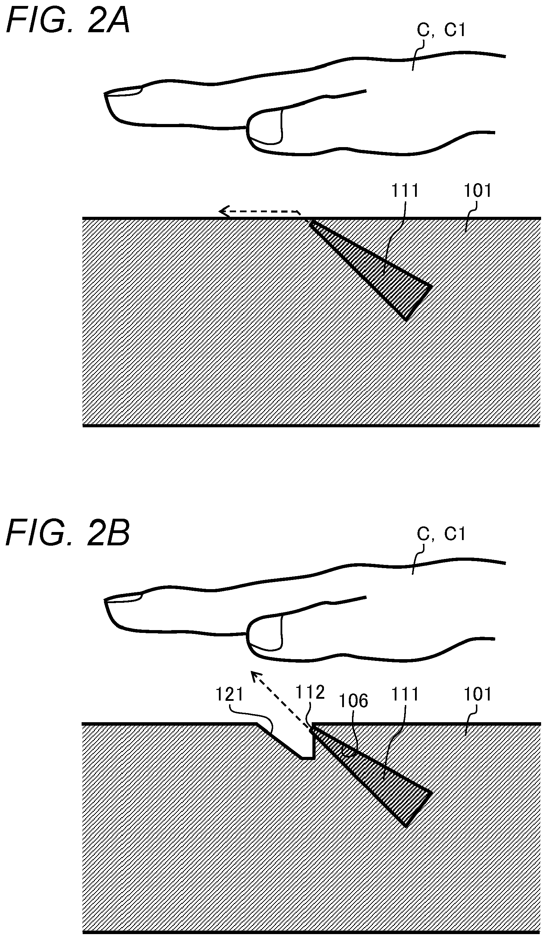

The nozzle 111 is embedded and installed in the lower substrate 101 such that the distal end of the nozzle 111 is positioned not to protrude from an upper surface (surface) 105 of the lower substrate 101. That is, the nozzle 111 is installed such that the distal end position of the nozzle 111 substantially coincides with the upper surface 105 of the lower substrate 101. Note that the distal end position of the nozzle 111 may be slightly higher than the upper surface of the lower substrate 101 unless the distal end position of the nozzle 111 greatly protrudes from the upper surface 105 of the lower substrate 101. The distal end position of the nozzle 111 may be positioned below the upper surface of the lower substrate 101. The jet opening 112 of the nozzle 111 is installed in an opening portion 106 provided on the upper surface 105 of the lower substrate 101. That is, the gas jetted from the nozzle 111 is jetted to the inspection object C through the opening portion 106 (FIG. 2B) .

The speed of the gas jetted from the nozzle 111 decreases as the distance from the nozzle 111 increases. That is, when the distance between the jet opening 112 of the nozzle 111 and the inspection object C is increased, the detachment efficiency of the attached substance decreases. Therefore, it is not desirable to unnecessarily increase the distance between the nozzle 111 and the inspection object C. In order to achieve the detachment efficiency, it is desirable that the positions of the jet opening 112 of the nozzle 111 and the lower substrate 101 coincide with each other.

If the distal end of the nozzle 111 protrudes greatly from the bottom surface, the distal end of the nozzle 111 has a possibility to come into great contact with the inspection object C when the inspection object C is inserted into the attached substance collection device 1, and therefore it is not preferable. In particular, it is not preferable in a case where the inspection object C is the hand C1.

### (Angle of nozzle 111)

As illustrated in FIG. 1C, the nozzle 111 is provided such that the jet opening 112 extends in the transverse direction with respect to the long axis direction of the lower substrate 101. Moreover, as illustrated in FIG. 1B, the nozzle 111 is inclined with respect to the vertical direction so that jetted gas is directed toward the collection opening E2. The inclination angle of the nozzle 111 is generally in a range about 15 to 90° with respect to the vertical direction, but is desirably 30 to 45°.

### (Recess portion 121)

As illustrated in FIGS. 1B and 1C, the lower substrate 101 is provided with the recess portion 121 as an air flow adjustment portion. In comparison with the jet opening, the recess portion 121 is installed closer to the collection opening E2 the. The recess portion 121 is provided to include the jet opening 112. The reason for providing the recess portion 121 will be described later.

### (Contact detection sensor 130)

The lower substrate 101 is provided with contact detection sensors 130 which each serves as a contact detection unit. As illustrated in FIG. 1C, the contact detection sensors 130 are provided at both the ends of the lower substrate 101. As illustrated in FIGS. 1B and 1C, the contact detection sensor 130 is a linear shaped sensor equipped along the long axis direction of the lower substrate 101, but is not limited thereto. Regarding the detection height of the contact detection sensor 130, any height is good enough as long as the contact detection sensor is capable of detecting whether or not the inspection object C is in contact with the lower substrate 101. As illustrated in FIG. 1C, the detection range of the contact detection sensor 130 is between the distal end (near the distal end) of the nozzle 111 (first nozzle 111a) on the side of the insertion port E1 and the 0-order filter 151. By doing so, contact of the inspection object C is prevented in a range where the gas flow is interrupted by contact of the inspection object C.

The contact detection sensor 130 is, for example, a photoelectric sensor equipped with a light irradiation unit 131 and a light reception unit 132. That is, by detecting shielding of light such as infrared light emitted from the light irradiation unit 131, the light reception unit 132 detects whether or not the inspection object C is in contact with the lower substrate 101. As described above, when the jet opening 112 is blocked by the inspection object C, gas jet is interrupted. Therefore, the detachment efficiency and the collection efficiency of the attached substance are decreased. It is thus desirable to jet gas in a state where the inspection object C is not in contact with the lower substrate 101. By providing the contact detection sensor 130, it is detected that the inspection object C comes into contact with the lower substrate 101. Due to this, as described later, gas jet may be stopped while the inspection object C is in contact with the lower substrate 101, and the detachment efficiency and the collection efficiency is improved. The relationship between the contact of the inspection object C with the lower substrate 101 by the contact detection sensor 130 and the gas jet will be described later.

The contact detection sensor 130 detects whether or not the inspection object C blocks the jet opening (distal end) 112 of the nozzle 111. In addition, the contact detection sensor 130 also detects whether or not the existence at a position where introduction of the separated attached substance to the 0-order filter 151 is interrupted. Therefore, the detection region of the contact detection sensor 130 is desirably a region between the jet opening 112 of the first nozzle 111a and the 0-order filter 151. Reversely, the contact of the inspection object C with the lower substrate 101 closer to the insertion port E1 relative to the jet opening 112 of the first nozzle 111a does not become a large problem. Therefore, the region from the jet opening 112 of the first nozzle 111a to the insertion port E1 may not be the detection region of the contact detection sensor 130.

### (0-order filter 151)

The 0-order filter 151 is installed between the distal end of the nozzle 111 (111b) closest to the collection opening E2 and the collection opening E2.

After colliding with the lower surface of the inspection object C, the gas jetted from the nozzle 111 flows toward the collection opening E2 by suction force of a concentration device 220 illustrated in FIG. 3. Due to the 0-order filter 151, an attached substance larger than a certain size is not introduced behind the 0-order filter 151. A stainless steel wire mesh (opening 0.5 mm, aperture ratio 50%) or the like may be used for the 0-order filter 151. In addition, the 0-order filter 151 is replaceable, and when the 0-order filter 151 is clogged with dust, the user may remove the 0-order filter 151, clean and reuse the filter, or replace the filter with a new one.

### (Upper cover 103)

As illustrated in FIG. 1B, the upper substrate 102 is provided so as to face a surface between the 0-order filter 151 of the lower substrate 101 and the collection opening E2. In addition, the transparent upper cover 103 is provided on the insertion opening E1 side with respect to the upper substrate 102 side. The upper cover 103 is connected to the upper substrate 102 via a side wall 104. The side wall 104 is not illustrated in FIGS. 1B and 1C.

The presence of the upper cover 103 may restrict the distance in the up-down direction between the inspection object C and the nozzle 111. That is, the inspection object C is prevented from being present at a position where the gas jetted from the nozzle 111 does not reach. In addition, by providing the transparent upper cover 103, the subject may look the position of the inserted inspection object C, and usability is improved. In particular, in a case where the inspection object C is a part of a human body such as a hand C1, it is highly possible that unseen of a body part of the subject causes a subject's oppressive feeling against the inspection when the upper cover 103 is not transparent. Therefore, also for the purpose of reducing the oppressive feeling against the inspection, the transparency of the upper cover 103 is meaningful.

Furthermore, as illustrated in FIG. 1B, the upper cover 103 is provided such that the distance from the lower substrate 101 increases as the upper cover 103 is closer to the insertion port E1. This facilitates insertion of the hand C1 or the like as the inspection object C. However, the distance between the upper cover 103 and the lower substrate 101 may be constant.

### (Insertion detection sensor 140)

The lower substrate 101 and the upper cover 103 are equipped with the insertion detection sensors 140 serving as insertion detection units. The insertion detection sensor 140 is, for example, a photoelectric sensor including a light irradiation unit 141 and a light reception unit 142. For example, the upper cover 103 is provided with the light irradiation unit 141, and the lower substrate 101 is provided with the light reception unit 142 so as to face the light irradiation unit 141. Then, by detecting shielding of light such as infrared light emitted from the light irradiation unit 141, the light reception unit 142 detects whether or not the inspection object C is inserted.

In the present embodiment, the inspection is started by inserting the inspection object C between the lower substrate 101 and the upper cover 103 of the attached substance collection device 1. The insertion detection sensor 140 detects the insertion of the inspection object C, and the contact detection sensor 130 detects that the inspection object C is not in contact with the lower substrate 101. When it is detected that the inspection object C is inserted into the attached substance collection device 1 and is not in contact with the lower substrate 101, gas is jetted from the nozzle 111 as described above (dashed arrow in FIG. 1B). Due to this, the attached substance is detached and collected from the lower surface of the inspection object C.

The gas jetted from the nozzle 111 spreads beyond the width of the nozzle 111 after the jet. Therefore, in order to improve the collection rate of the detached attached substance, the width of the 0-order filter 151 is required to be wider than the width of the nozzle 111. The width of the collection opening E2 is narrower than the width of the nozzle 111 and the width of the 0-order filter 151.

As illustrated in FIGS. 1B and 1C, in comparison with the 0-order filter 151, the insertion detection sensor 140 is installed closer to the insertion opening E1 , and near the 0-order filter 151. The insertion detection sensor 140 may be provided at any position between the 0-order filter 151 and the insertion opening E1, but is preferably proximate to the 0-order filter 151 as illustrated in FIGS. 1B and 1C. The insertion detection sensor 140 is desirably provided at least between the nozzle 111a illustrated in FIG. 1C and the 0-order filter 151. Since the insertion detection sensor 140 is proximate to the 0-order filter 151, the insertion detection sensor 140 detects insertion when the inspection object C is deeply inserted. Due to this, after it is confirmed that the inspection object C is certainly present immediately above the nozzle 111, the gas is jetted. This may improve the accuracy of detachment and collection of the attached substance.

In FIGS. 1B and 1C, the hand C1 is illustrated as the inspection object C, but the present invention is not limited thereto. As the inspection object C, an integrated circuit (IC) card, a mobile phone, a portable terminal, a ticket, a passport, or the like may be used. In the examples of FIGS. 1A through 1C, a region of about 50 mm in depth × 100 mm in width is expected as a detection target of the contact detection sensor 130. In addition, the width of the attached substance collection device 1 is expected to be about 120 mm, and the width of the nozzle 111 is expected to be about 100 mm. However, the present invention is not limited to this size. Note that the IC card is inserted into the attached substance collection device in a state of being held by a hand C2.

### (Recess portion 121)

Next, the recess portion 121 will be described with reference to FIGS. 2A and 2B. FIG. 2A illustrates the flow of gas in a case where the recess portion 121 is not provided, and FIG. 2B illustrates the flow of gas in a case where the recess portion 121 is provided.

In the present embodiment, the height of the distal end of the nozzle 111 is substantially the same as the height of the upper surface 105 of the lower substrate 101 or equal to or less than the height of the upper surface 105 of the lower substrate 101 so that the inspection object C (hand C1) does not come into much contact with the distal end of the nozzle 111. However, such a configuration causes the following problems.

FIG. 2A illustrates a case where the recess portion 121 is not provided in a state where the height of the distal end of the nozzle 111 is substantially the same as the height of the upper surface 105 of the lower substrate 101 or is equal to or less than the height of the upper surface 105 of the lower substrate 101.

That is, as illustrated in FIG. 2A, if the recess portion 121 is not provided, the gas jetted from the nozzle 111 is attracted to the lower substrate 101 due to the Coand 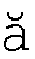 effect of fluid dynamics (dashed arrow in FIG. 2A). In this case, since the jetted gas does not flow toward the inspection object C, the detachment efficiency decreases.

On the other hand, as in FIG. 2B, when the recess portion 121 is provided in the gas jet direction with respect to the nozzle 111, generation of the Coand 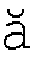 effect is suppressed, and the gas flows toward the inspection object C (dashed arrow in FIG. 2B). This achieves an efficient detachment.

As illustrated in FIGS. 1B and 2B, the recess portion 121 has an upward expanding shape (expanding portion). When the gas is jetted from the nozzle 111, the pressure around the jetted gas decreases due to the flow velocity of the gas. That is, when the gas is jetted from the nozzle 111, the surrounding region of the jetted gas has a negative pressure. Then, dust and the like accumulated in the recess portion 121 are attracted to the gas. Thus, dust and the like is removed from the recess portion 121. At this time, as illustrated in FIGS. 1B and 2B, the recess portion 121 has the upward expanding shape, and thus dust and the like easily come out of the recess portion 121. That is, since the recess portion 121 has the upward expanding shape, dust and the like accumulated inside the recess portion 121 is removed by using jet of the gas. As a result, the accumulation of dust and the like inside the recess portion 121 may be prevented.

From the above, in order to obtain a high detachment efficiency while reducing the risk of damaging the inspection object C, it is desirable to install the recess portion 121 in the direction of the gas jet from the jet opening112 while making the height of the jet opening 112 in the nozzle 111 equal to the height of the upper surface 105 of the lower substrate 101. Although it is also conceivable to install the recess portion 121 behind the nozzle 111, it is similar to a situation where the nozzle 111 protrudes from the lower substrate 101, and the distal end of the nozzle 111 is highly possible to come into great contact with the inspection object C. Since the recess portion 121 desirably exists over the entire jet opening 112, the width of the recess portion 121 is desirably equal to or larger than the width of the nozzle 111.

As described above, in FIGS. 1A through 1C, the two nozzles 111 are provided, but the number of the nozzles is not limited thereto. When the number of the nozzles 111 changes, the number of the recess portions 121 also changes accordingly.

### (Attached substance analysis system 200)

FIG. 3 is a view illustrating the configuration of the attached substance analysis system 200 according to the first embodiment.

The attached substance analysis system 200 illustrated in FIG. 3 expects a security gate capable of analyzing an attached substance attached to the surface of the inspection object C. In particular, the attached substance analysis system 200 illustrated in FIG. 3 is intended to detect a dangerous material such as an explosive.

The attached substance analysis system 200 includes the attached substance collection device 1, a pulse valve 211, an air tank 212, a pressure controller 213, a compressor 214, and the concentration device 220. The attached substance analysis system 200 includes an analysis device 231, a data processing device 300, a display device 232, the gate 233, and an alarm device 234. The concentration device 220 includes a cyclone collection unit 221, a heater 222, a primary filter 223, a secondary filter 224, and an exhaust device 225. Note that the attached substance analysis system 200 is not necessarily limited to this configuration, and FIG. 3 illustrates a representative example.

Although not expressed in FIG. 3, the data processing device 300 is connected to each of a configuration to be controlled and a configuration to receive data.

The cyclone collection unit 221 is used for separating and concentrating an attached substance from gas. In the attached substance collection device 1, the adhered substance is detached together with the gas jetted from the nozzle 111 at about 200 L/min. The nozzle 111 is connected to the air tank 212 via a nozzle pipe 215 for supplying gas to the nozzle 111. In this manner, the air tank 212 is provided between the pulse valve 211 and the compressor 214. For example, when the flow rate for the pulse valve 211 is 60 L/min, 100 mL of gas is discharged from the nozzle 111 in 0.1 seconds. When the gas is jetted a plurality of times, the gas is discharged by that amount. Therefore, by providing the air tank 212, a required amount of compressed gas can be stored in the air tank 212. Note that the air tank 212 may not be provided.

In the compressor 214, the gas pressure is increased to about 0.7 MPa. The gas pressure supplied to the nozzle 111 is adjusted by the pressure controller 213.

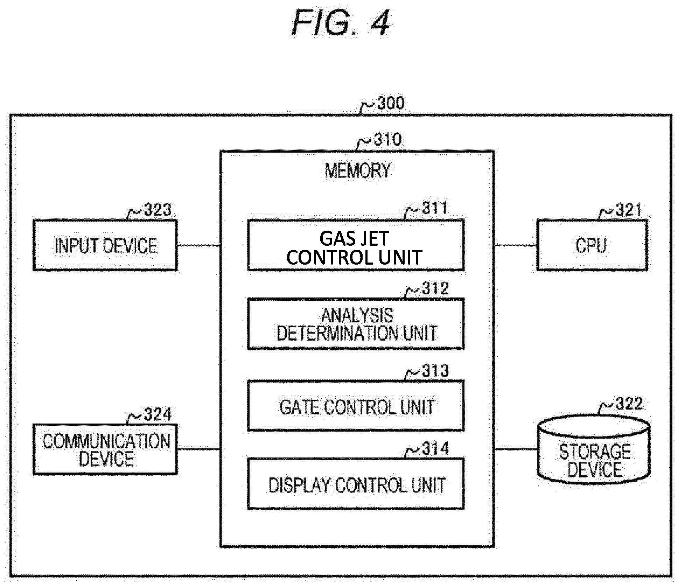

The pulse valve 211 is normally closed, and is opened for about 0.1 seconds by a gas jet control unit 311 of the data processing device 300 illustrated in FIG. 4, thereby supplying compressed gas to the nozzle 111 in a pulsed manner. In FIG. 3, the one pressure controller 213 and the one compressor 214 are connected to the two pulse valves 211. However, the present invention is not limited thereto, and the pressure controller 213 and the compressor 214 may be individually connected to each pulse valve 211. In particular, by arranging the pressure controller 213 for each pulse valve 211, the pressure of the gas supplied may be varied by the position of the nozzle 111. For example, the nozzle 111a and the nozzle 111b may have different flow velocities and flow rates of the gases jetted from the nozzles 111a and 111b.

Here, the compressed gas is jetted from the nozzle 111 using the compressor 214, but the gas may be jetted by using an air blower or the like without using the compressor 214.

A mass spectrometer and an ion mobility analysis device, which are representative analysis devices 231, suck only a sample flow rate of equal to or less than 1 L/min in general. If the gas of 200 L/min is jetted from the nozzle 111, of which only 1 L/min is sucked, the sensitivity becomes 1/200.

Therefore, by installing the cyclone collection unit 221 between the attached substance collection device 1 and the analysis device 231, the attached substance analysis system 200 illustrated in FIG. 3 separates and concentrates the collected attached substance. An inlet E3 of the cyclone collection unit 221 is connected to the collection opening E2 of the attached substance collection device 1. Under centrifugal force, the cyclone collection unit 221 collects a sample having a certain particle size and density or more into a lower portion of the cyclone collection unit 221. For example, under a certain condition, an attached substance having A particle size of equal to or greater than 1 µm rotationally moves in the cyclone collection unit 221, and is separated to the outer peripheral side in the cyclone collection unit 221 by centrifugal force. On the other hand, the rotation radius decreases downward in the cyclone collection unit 221. An attached substance having a particle size of less than 1 µm is discharged together with the gas from a central suction pipe by the exhaust device 225 (open arrow in FIG. 3).

The minimum particle size (separation limit particle size) of the attached substance separated from the gas by the rotational motion varies depending on the configuration of the cyclone collection unit 221 and the suction flow rate of the exhaust device 225. The attached substance collected in the lower part of the cyclone collection unit 221 settles down to the heater 222 as it is. The heater 222 includes the primary filter 223. The attached substance having been settled is collected by the primary filter 223 and heated by the heater 222. The attached substance is vaporized there and the vaporized gas is introduced into the analysis device 231 through the secondary filter 224.

For example, since explosive fine particles, which is one of dangerous materials, usually has a particle size of about 5 to 100 µm, it is preferable to collect fine particles having this particle size. The detection target may be not only the explosive fine particles but also a chemical agent, a harmful substance, a dangerous substance, a combustible substance, a biological agent, a virus, a bacterium, a gene, an environmental substance, or the like as long as it adheres to the inspection object. The concentration device 220 is not limited to the cyclone collection unit 221 as long as an attached substance having been separated is concentrated. In order to enhance the effect of the concentration device 220, the suction flow rate of the concentration device 220 is desirably larger than the flow rate of the gas jetted from the nozzle 111. For example, if the flow rate of the gas jetted from the nozzle 111 is 100 L/min, the suction flow rate of the cyclone collection unit 221 is desirably equal to or greater than 100 L/min. If the suction flow rate of the cyclone collection unit 221 is 150 L/min and the flow rate from the cyclone collection unit 221 to the analysis device 231 is 0.5 L/min, the fine particles (attached substance) concentrated in the cyclone collection unit 221 are concentrated 300 times. Thus, by concentrating the attached substance with the concentration device 220, the analysis accuracy in the analysis device 231 is improved.

The inlet E3 of the cyclone collection unit 221 is generally rectangular of which the height is greater than the width. Regarding the cyclone size as expected in the present embodiment, the width of the inlet E3 of the cyclone collection unit 221 is about several 10 mm at the maximum. Therefore, the width of the inlet E3 of the cyclone collection unit 221 becomes smaller than the width of the 0-order filter 151 (not illustrated). The inlet E3 of the cyclone collection unit 221 and the collection opening E2 of the 0-order filter 151 have a structure to be smoothly coupled so that the attached substance having passed through the 0-order filter 151 is efficiently introduced into the inlet E3 of the cyclone collection unit 221.

The heater 222 heats the attached substance at, for example, 200°C. Regarding the temperature of the heater 222, any temperature is good enough as long as the attached substance to be collected is vaporized, and the temperature of the heater 222 may be varied depending on a component of the object. The user may remove the primary filter 223 and the secondary filter 224. Then, the user may clean and reuse the primary filter 223 and the secondary filter 224 as necessary, or replace them with new ones. The primary filter 223 and the secondary filter 224 may be replaced manually, but a predetermined automatic replacement device may replace the primary filter 223 and the secondary filter 224. The primary filter 223 and the secondary filter 224 are good enough when they have a filtration accuracy capable of capturing fine particles having a particle size of equal to or greater than 1 µm.

For example, a stainless steel filter having a filtration accuracy of 1 to 50 µm is used as the primary filter 223 and the secondary filter 224. A pipe 226 connecting the heater 222 and the analysis device 231 is also heated. This is to prevent molecules vaporized by the heater 222 from being adsorbed to the pipe inner wall. The secondary filter 224 is installed for the purpose of preventing an attached substance not captured by the primary filter 223 from entering the analysis device 231. The pipe 226 between the heater 222 and the analysis device 231 is not necessarily required, and the heater 222 and the analysis device 231 may be directly connected.

As the analysis device 231, for example, a wire-type linear ion trap mass spectrometer or the like may be used. As a mass spectrometry method, a linear ion trap mass spectrometer, a quadrupole ion trap mass spectrometer, a quadrupole filter mass spectrometer, a triple quadrupole mass spectrometer, a time-of-flight mass spectrometer, a magnetic field mass spectrometer, and the like may be applied. Alternatively, an ion mobility analysis device and the like may also be used. In addition to them, a device in which an ion mobility analysis device and a mass spectrometer are coupled may also be used. Moreover, the analysis device 231 using various light sources such as fluorescence, infrared rays, and ultraviolet rays may be used.

When the mass spectrometer is used as the analysis device 231, the data processing device 300 analyzes the measured mass spectrum, and identifies the component of the attached substance and specifies the concentration from this mass spectrum. A database is created in advance in the data processing device 300, and a threshold for determining whether or not the specified attached substance is a dangerous material is set in advance. If the concentration of the detected component exceeds a designated threshold, the data processing device 300 makes a positive determination. In this case, the data processing device 300 may display the detected component on the display device 232. The analysis result may be notified to a monitoring center or a monitor at a remote place without displaying the result on the display device 232. In the present embodiment, the gate 233 is closed in cooperation with this analysis result. In addition to this, recording by a monitoring camera, recording of authentication data, and the like may be performed. Not only the mass spectrometer but also other analysis devices 231 such as an ion mobility analysis device analyze an attached substance by collating with a database. The alarm device 234 will be described later.

By connecting the analysis device 231 to the attached substance collection device 1 (via the concentration device 220), the attached substance collected by the attached substance collection device 1 is analyzed. As a result, a dangerous material such as an explosive in the inspection object C is detected.

### (Data processing device 300)

FIG. 4 is a view illustrating a configuration example of the data processing device 300 according to the first embodiment.

The data processing device 300 includes a memory 310 and a central processing unit (CPU) 321, a storage device 322 such as a hard disk (HD), an input device 323 such as a keyboard and a mouse, and a communication device 324 such as a network interface card (NIC).

Then, a program stored in the storage device 322 is loaded into the memory 310, and the loaded program is executed by the CPU 321. This embodies the gas jet control unit 311, an analysis determination unit 312, a gate control unit 313, and a display control unit 314.

By controlling the pulse valve 211 and the like, the gas jet control unit 311 controls the pulse valve 211 and the like to jet gas from the nozzle 111 of the attached substance collection device 1.

The analysis determination unit 312 determines whether or not an explosive has been detected based on the analysis result of the analysis device 231.

The gate control unit 313 controls opening and closing of the gate 233 according to the determination result of the analysis determination unit 312.

The display control unit 314 performs display on the display device 232.

### (Gas jet processing)

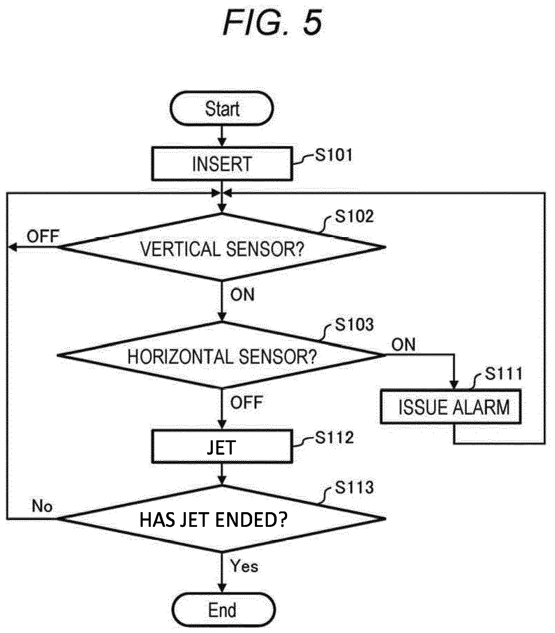

FIG. 5 is a flowchart illustrating the procedure of gas jet processing in the first embodiment.

First, the subject inserts the inspection object C into the attached substance collection device 1 (S101).

Then, the gas jet control unit 311 of the data processing device 300 determines the insertion detection sensor 140 ("vertical sensor") in "ON" or "OFF" (S102). That is, the gas jet control unit 311 determines whether or not the inspection object C has been inserted to an appropriate position.

If the insertion detection sensor 140 is in "OFF" (S102: OFF), the gas jet control unit 311 returns the processing to step S102.

If the insertion detection sensor 140 is "ON" (S102: ON), the gas jet control unit 311 determines the contact detection sensor 130 ("horizontal sensor") in "ON" or "OFF"(S103).

If the contact detection sensor 130 is in "ON" (S103: ON), there is a high possibility that the inspection object C is in contact with the lower substrate 101, and hence the gas jet control unit 311 causes the alarm device 234 to issue an alarm (S111). The alarm emits a voice such as "Please lift the inspection object". Subsequently, the gas jet control unit 311 returns the processing to step S102.

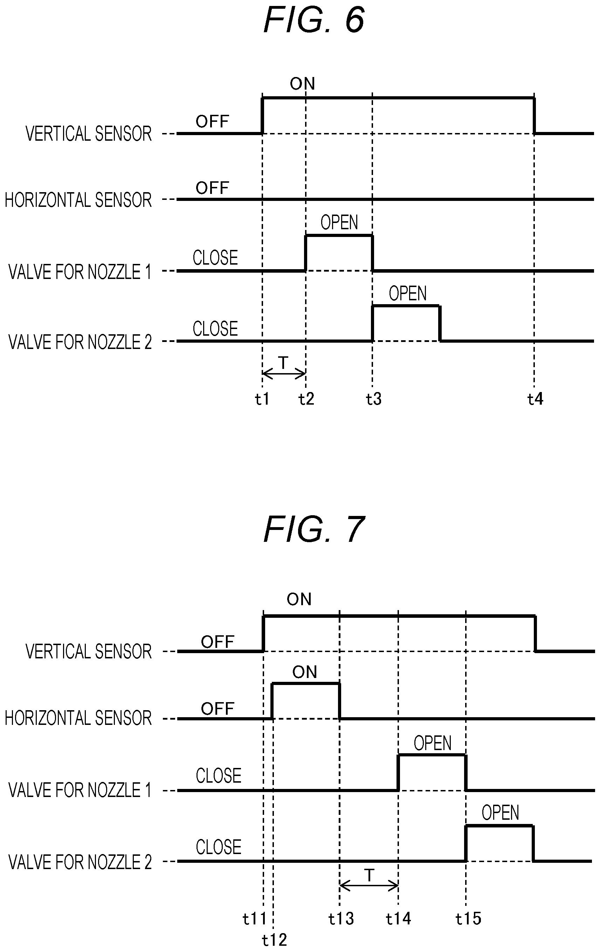

If the contact detection sensor 130 is in "OFF" for a predetermined time (S103: OFF), the gas jet control unit 311 controls the pulse valve 211 to jet gas from the nozzle 111 (S112). Here, the predetermined time is a jet waiting time T illustrated in FIGS. 6 to 8.

Then, the gas jet control unit 311 determines whether or not the jet of the gas has ended (S113).

If the jet of the gas has not ended (S113 → No), the gas jet control unit 311 returns the processing to step S102.

If the jet of the gas has ended (S113 → Yes), the gas jet control unit 311 ends the processing.

After step S111, if the inspection target is lifted as per the voice, the condition in which the insertion detection sensor 140 is in "ON" and the contact detection sensor 130 is in "OFF", is satisfied, and hence the gas jet control unit 311 causes gas to be jetted.

### (Gas jet timing)

FIGS. 6 to 8 are views illustrating a timing chart of gas jet.

FIGS. 6 to 8 illustrate reactions of the contact detection sensor 130 ("horizontal sensor") and the insertion detection sensor 140 ("vertical sensor"), and the relationship of "ON"/"OFF" of the pulse valve 211 for controlling gas jet.

The inspection object C is inserted into the attached substance collection device 1. With this, as illustrated in FIG. 6, when the inspection object C cuts the light such as the infrared light irradiated by the light irradiation unit 141 of the insertion detection sensor 140, the insertion detection sensor 140 is turned "ON" (time t1). In a case where the contact detection sensor 130 is not turned "ON" as illustrated in FIG. 6, i.e. in a case where the inspection object C is not in contact with the lower substrate 101, each valve for first nozzle ("valve for nozzle 1") and a valve for second nozzle ("valve for nozzle 2") are sequentially opened and closed after the insertion detection sensor 140 is turned "ON" and the jet waiting time T has elapsed(time t2, t3). The valve for first nozzle is the pulse valve 211 connected to the first nozzle 111a illustrated in FIG. 1C. Similarly, the valve for second nozzle is the pulse valve 211 connected to the second nozzle 111b illustrated in FIG. 1C.

By performing the control as illustrated in FIG. 6, the gas is jetted from the first nozzle 111a first and from the second nozzle 111b next. Then, when the inspection object C is removed from the attached substance collection device 1, the insertion detection sensor 140 is turned "OFF" (time t4).

FIG. 7 illustrates a case where the contact detection sensor 130 is turned "ON". That is, this is a case where the inspection object C comes into contact with the lower substrate 101. After the insertion detection sensor 140 is turned "ON" (time t11), the contact detection sensor 130 is turned "ON" (time t12). In such a case, the pulse valve 211 is not opened or closed even if the jet waiting time T elapses after the insertion detection sensor 140 is turned "ON". Then, when the inspection object C is apart from the lower substrate 101 and the contact detection sensor 130 is turned to "OFF" (time t13), the valve for first nozzle is opened and closed first and the valve for second nozzle is opened and closed next after the jet waiting time T has elapsed (time t14, t15).

In the case illustrated in FIG. 6 and the case illustrated in FIG. 7, the jet waiting time T does not need to be the same, but in both cases, the jet waiting time T is desirably about 0 to 100 ms. However, it is not necessarily within the range.

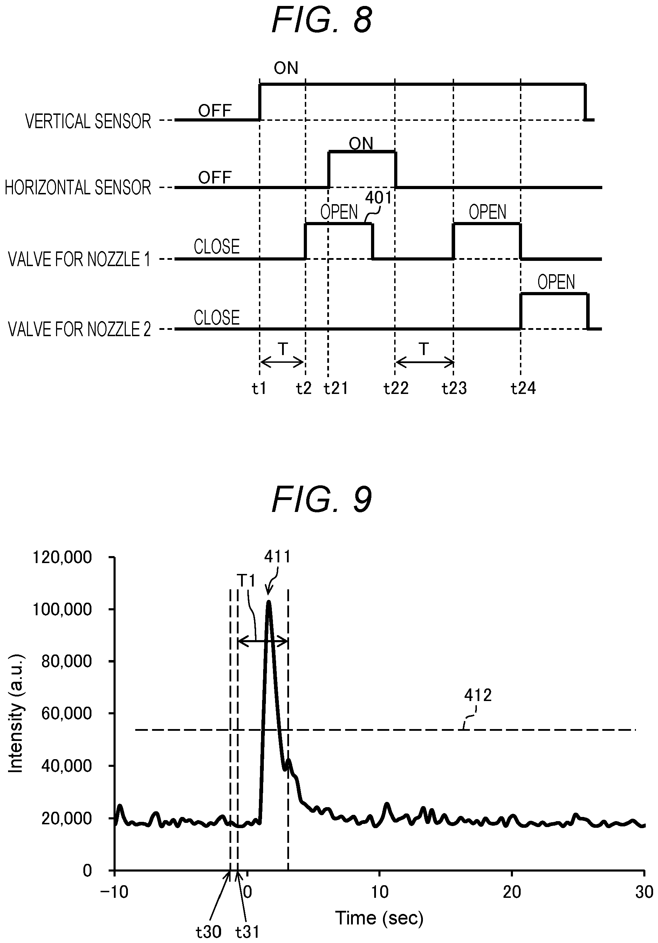

FIG. 8 illustrates a case where the contact detection sensor 130 is turned "ON" while the valve for first nozzle is open. The times t1 and t2 in FIG. 8 are similar to those in FIG. 6. That is, FIG. 8 illustrates a case where the inspection object C comes into contact with the lower substrate 101 while the gas is jetted through the first nozzle 111a. Thus, in a case where the timing of "ON" of the contact detection sensor 130 (time t21) precedes the completion of opening and closing of the valve for first nozzle, the valve for first nozzle is opened and closed first and the valve for second nozzle is opened and closed next (time t23, t24)after the time of the contact detection sensor 130 turning to be "OFF" (t22) and the elapse of the jet waiting time T. That is, when the contact detection sensor 130 is turned "ON" while the gas is jetted through the first nozzle 111a, the gas jet is reset.

However, since an explosive or the like can be detected by the attached substance detached at the stage of the first gas jet (reference sign 301) in FIG. 8, an analysis determination is also executed in the gas jet at the timing of reference sign 401.

The same applies to a case where the contact detection sensor 130 is turned "ON" while the valve for second nozzle is open. That is, when the contact detection sensor 130 is turned "ON" while the valve for second nozzle is open, the valve for first nozzle is opened and closed first and the valve for second nozzle is opened and closed next after the contact detection sensor 130 is turned "OFF".

In FIGS. 6 to 8, the opening and closing of the valve for first nozzle and the valve for second nozzle are temporally adjacent to each other, but there may be a time interval between the opening and closing of each pulse valve 211.

In FIGS. 6 to 8, the first nozzle 111a and the second nozzle 111b are illustrated in FIG.1, the gas is jetted from the first nozzle 111a first and from the second nozzle 111b next. However, the present invention is not limited thereto, and the jet may be performed in the order of the second nozzle 111b first and the first nozzle 111a next. Alternatively, the jet may be performed by the first nozzle 111a and the second nozzle 111b simultaneously.

### (Actual signal example)

FIG. 9 is a view illustrating a signal obtained when an experiment is conducted using, as the inspection object C, a card to which a plastic explosive is attached in the configuration illustrated in FIGS. 1 and 3. The card was inserted into the attached substance collection device 1 in a state of being held in the hand C2.

Sample insertion is detected at timing of time t30, and gas is jetted at time t31. The explosive detached by the gas is collected, heated, and vaporized, and a signal detected by the mass spectrometer (analysis device 231) is confirmed with reference sign 411. As illustrated in FIG. 9, the signal reaches a peak in about 2 seconds from the jet (time t31). As illustrated in FIG. 9, a detection threshold 412 is set. In the example of FIG. 9, since the signal exceeds the detection threshold 412, the inspection object is determined as positive. A certain period of time from the time t30 at which the insertion of the inspection target object C is detected, is defined as a determination time T1. The analysis determination unit 312 of the data processing device 300 determines what the attached substance is based on the signal detected within the determination time T1.

### (Processing of attached substance analysis system)

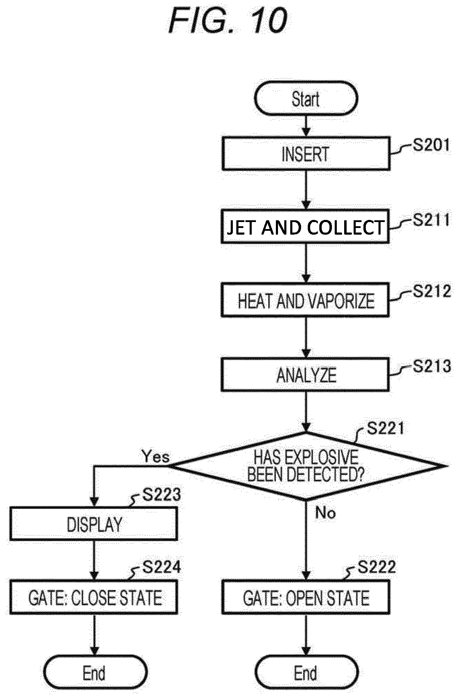

FIG. 10 is a flowchart illustrating the processing procedure of an attached substance analysis system 200 according to the first embodiment.

In FIG. 10, it is expected that the attached substance analysis system 200 is a gate type and determines whether or not to permit passage based on the detection state of an explosive.

First, the subject approaches the attached substance analysis system 200 and inserts the inspection object C into the attached substance collection device 1 (S201).

When the insertion detection sensor 140 detects insertion of the inspection object C and the contact detection sensor 130 detects that the inspection object C is not in contact with the lower substrate 101, the gas jet control unit 311 of the data processing device 300 causes gas to be jetted from the nozzle 111 to detach and collect the attached substance attached to the inspection object C (S211). The processing in step S211 is the processing illustrated in FIG. 5.

The collected attached substance is heated and vaporized by the heater 222 (S212), and the analysis device 231 analyzes the vaporized gas (S213).

The analysis determination unit 312 of the data processing device 300 determines whether or not an explosive is detected by the processing of step S213 (S221). As described above, the analysis determination unit 312 makes the determination in step S221 based on the threshold for determining whether or not the specified attached substance stored in the storage device 322 of the data processing device 300 is a dangerous material.

If no explosive is detected (S221: No), the gate control unit 313 of the data processing device 300 brings the gate 233 into an open state (S222) and permits the subject to pass.

If an explosive is detected (S221: Yes), the display control unit 314 of the data processing device 300 displays, on the display device 232, a meaning that the explosive is detected (S223). Subsequently, the gate control unit 313 brings the gate 233 into a close state (S224) and does not permit the subject to pass.

According to the first embodiment, the contact detection sensor 130 is provided on the upper surface 105 of the lower substrate 101. This avoids the distal end of the nozzle 111 from being blocked by the inspection object C, and thus the reliability of collection of the attached substance is improved.

According to the first embodiment, the jet opening 112 of the nozzle 111 is included, and the recess portion 121 is provided in the direction of the gas jet by the nozzle 111. Doing this enables the gas to be appropriately applied to the inspection object C as described in FIG. 2B.

With these configurations, the attached substance attached to the inspection object C is stably collected.

The attached substance collection device 1 illustrated in the first embodiment is provided with the insertion detection sensor 140. By providing the insertion detection sensor 140, the gas is jetted after the inspection object C is certainly inserted into the attached substance collection device 1.

### [Second embodiment]

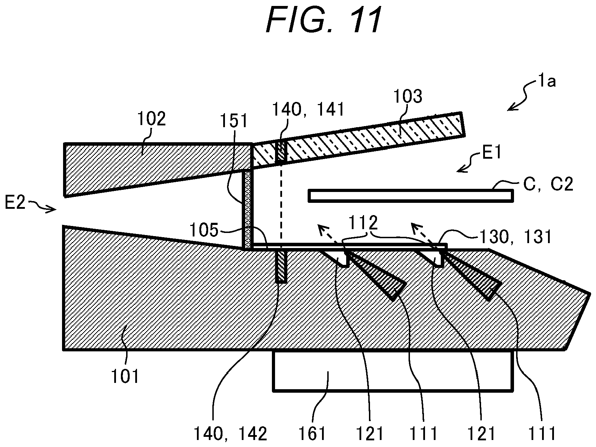

FIG. 11 is a view illustrating the configuration of an attached substance collection device 1a according to the second embodiment.

The attached substance collection device 1a illustrated in FIG. 11 is equipped with an authentication device 161 below the lower substrate 101. For example, when the inspection object C is an ID card C2, the authentication device 161 serves as an ID card authentication device. When the ID card C2 is inserted into the attached substance collection device 1a, authentication of the ID card C2 is performed simultaneously with collection and analysis of the attached substance by gas.

The authentication device 161 is not limited to the ID card authentication device, and may be a fingerprint authentication device or a finger vein authentication device. In particular, when the inspection object C is a hand C1 or a finger, it is desirable to provide a fingerprint authentication device or a finger vein authentication device as the authentication device 161. In such a case, when the hand C1 is inserted into the attached substance collection device 1a, authentication of the fingerprint or the finger vein is performed simultaneously with collection and analysis of the attached substance of the hand C1 by the jetted gas.

In the example illustrated in FIG. 11, the authentication device 161 is provided below the lower substrate 101. However, the present invention is not limited thereto, and the authentication device 161 may be provided on the upper part of the upper cover 103. However, since the authentication device 161 has a distance in which the authentication device is allowed to authenticate, the inspection object C is set to come within the distance for authentication by the authentication device 161. When the subject inserts the inspection object C into the attached substance collection device 1a, the subject naturally brings the inspection object C close to the lower portion side of the attached substance collection device 1a due to the influence of gravity. For this reason, the authentication device 161 is desirably installed below the lower substrate 101.

### (Data processing device 300a)

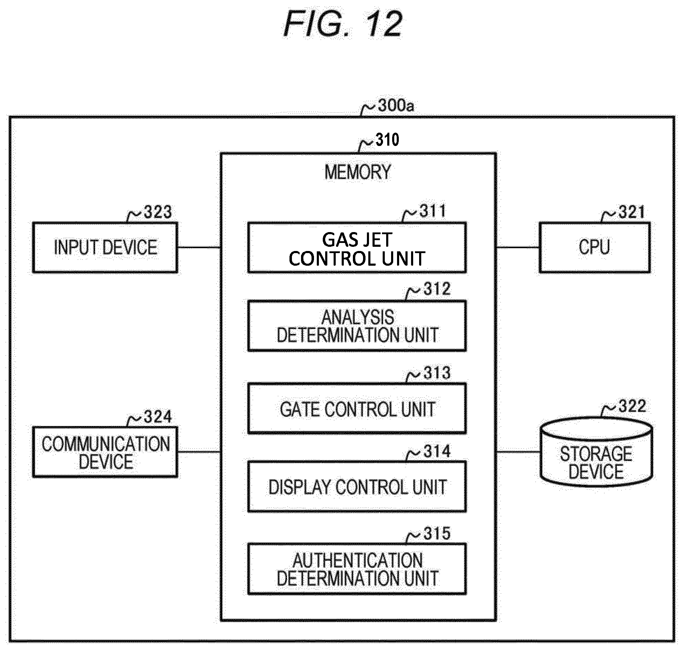

FIG. 12 is a view illustrating the configuration of a data processing device 300a according to the second embodiment.

In FIG. 12, the same components as those in FIG. 4 are given the same reference signs, and the description thereof will be omitted.

The data processing device 300a illustrated in FIG. 12 is different from the data processing device 300 illustrated in FIG. 4 in that the memory 310 is equipped with an authentication determination unit 315.

The authentication determination unit 315 determines whether or not the authentication information acquired from the authentication device 161 is correct.

### (Processing of attached substance analysis system)

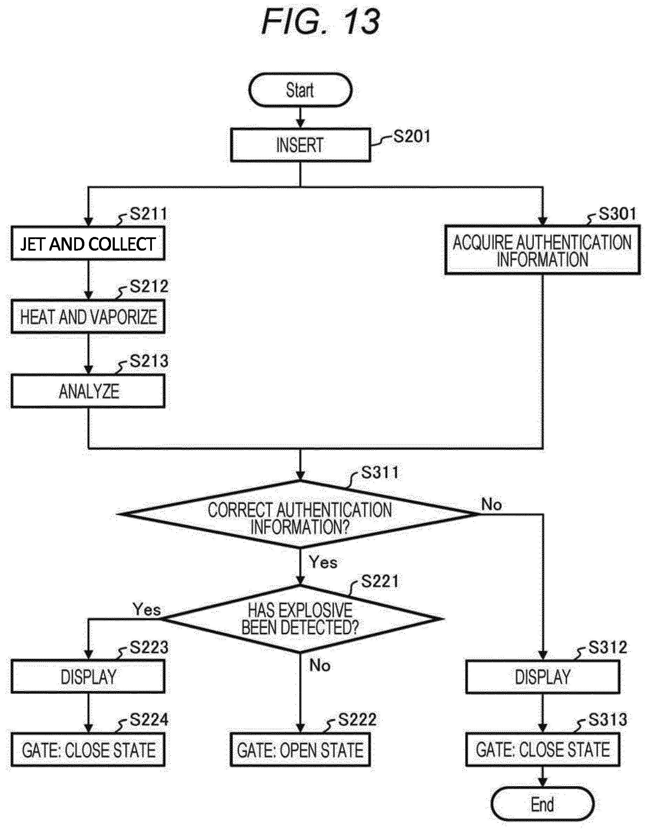

FIG. 13 is a flowchart illustrating the processing procedure of the attached substance analysis system 200 according to the second embodiment.

Here, steps S201 to S213 illustrated in FIG. 10 are also performed.

Then, in parallel with the processing of steps S211 to S213, the authentication device 161 acquires authentication information from the inspection object C (S301).

Then, the authentication determination unit 315 of the data processing device 300a determines whether or not the authentication information acquired in step S301 is correct authentication information (S311).

If it is not correct authentication information (S311: No), the display control unit 314 of the data processing device 300a displays a meaning that the authentication cannot be performed (S312), on the display device 232. Subsequently, the gate control unit 313 brings the gate 233 into a close state (S313) and does not permit the subject to pass.

If it is correct authentication information (S311: Yes), the analysis determination unit 312 of the data processing device 300a determines whether or not an explosive is detected by the processing in step S222 (S221). Since the processing of steps S221 to S224 is similar to the processing illustrated in FIG. 10, the description thereof will be omitted here.

According to the second embodiment, the security level is improved by simultaneously performing explosive inspection and authentication.

### [Third embodiment]

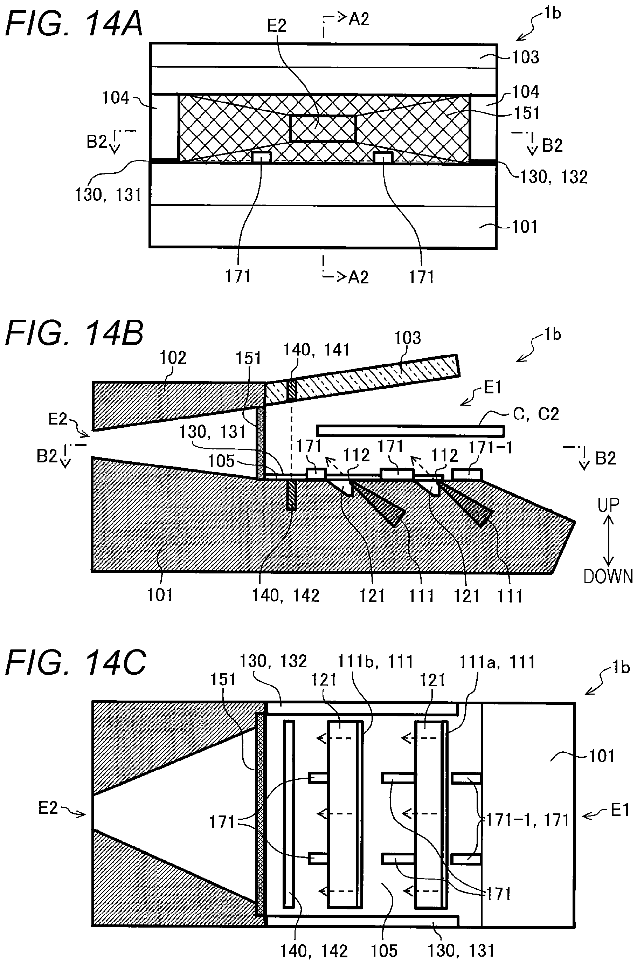

FIGS. 14A through 14C are views illustrating the configuration of an attached substance collection device 1b according to the third embodiment. FIG. 14A is a view of the attached substance collection device 1b as viewed from the insertion opening E1 direction. FIG. 14B is an A2-A2 cross-sectional view of FIG. 14A. FIG. 14C is a B2-B2 cross-sectional view of FIGS. 14A and 14B.

As illustrated in FIGS. 14A through 14C, the attached substance collection device 1b is provided with a convex structure, i.e. a rib, serving as a spacer 171 on the upper portion of the lower substrate 101. The spacer 171 restricts variation of the distance in the height direction in the inspection object C and the nozzle 111. The spacer 171 prevents contact between the inspection object C and the lower substrate 101.

The side wall 104 is not illustrated in FIGS. 14B and 14C.

The spacer 171 is useful when the inspection object C is not something that has an easily deformed shape such as the hand C1 but something that has a fixed shape such as the ID card C2 and a passport as illustrated in FIGS. 14A through 14C.

In the example illustrated in FIGS. 14A through 14C, the spacer 171 has a quadrangular cross-sectional shape, but may have an arc shape or the like. That is, the cross-sectional shape of the spacer 171 is not limited as long as it restricts contact between the inspection object C and the lower substrate 101.

When the inspection object C comes into contact with the spacer 171 at the time of inspection, the distance between the distal end of the nozzle 111 and the inspection object C is restricted by the height of the spacer 171 as described above. The lower the spacer 171 is, the smaller the height direction distance between the distal end of the nozzle 111 and the inspection object C becomes. The flow velocity of the gas jetted from the nozzle 111 decreases with increasing distance from the nozzle 111. The dynamic pressure acting on the attached substance by gas is proportional to the square of the flow velocity. Therefore, the faster the flow rate is, the higher the dynamic pressure acting on the attached substance becomes. That is, the smaller the distance between the nozzle 111 and the attached substance is, the higher the dynamic pressure becomes. However, if the height of the spacer 171 is made too low, when the inspection object C has a concave-convex portion, the concave-convex portion has a possibility to come into contact with the lower substrate 101. It is known that the region in which the gas is jetted from the nozzle 111 has a region called a potential core region in which the flow velocity does not decrease from the velocity at the outlet of the nozzle 111. In order to efficiently detach the attached substance while separating the distance between the nozzle 111 and the inspection object C to some extent, the height of the spacer 171 is preferably designed so that the distance between the inspection object C and the nozzle 111 falls within the potential core region. As a result, the height of the spacer 171 is desirably set to be between 2 to 4 mm.

Even if the spacer 171 as illustrated in FIGS. 14A through 14C is disposed, a means for detecting contact of the inspection object C with the lower substrate 101 should be included, and the contact detection sensor 130 is essential. However, when the spacer 171 exists, there is a possibility that the spacer 171 interrupts infrared rays of the contact detection sensor 130. Therefore, measures are taken such as providing the transparent spacer 171 or hollowing the lower portion of the spacer 171 so as not to interrupt detection of the contact detection sensor 130.

If the spacer 171 exists between the nozzle 111 and the 0-order filter 151, the spacer 171 possibly interrupts the flow of the gas jetted from the nozzle 111. Therefore, the spacer 171 preferably has a thin structure within a range where the strength becomes sufficient so as not to interrupt the flow of the gas. Here, the thin structure is a structure in which the axial direction toward the insertion opening E1 and the collection opening E2 is the longitudinal direction.

On the other hand, in comparison with the nozzle 111, a spacer 171-1 installed closer to the insertion opening E1 hardly affects the jet gas. For this reason, the spacer 171-1 does not necessarily have a thin structure. For example, the spacer 171-1 may have a structure that has a concave structure in the entire region from the first nozzle 111a to the insertion port E1.

The height of each spacer 171 may be the same, or the height of at least one spacer 171 may be different.

### [Fourth embodiment]

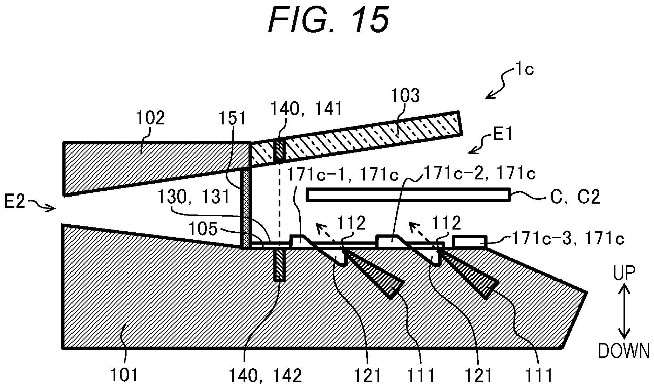

FIG. 15 is a view illustrating the configuration of an attached substance collection device 1c according to the fourth embodiment. FIG. 15 is a cross-sectional view corresponding to FIG. 14B.

The attached substance collection device 1c illustrated in FIG. 15 includes the spacer 171 in the adhered substance collection device 1 illustrated in FIG. 14 with a shape having been changed. That is, a spacer 171c of the nozzle 111 side is diagonally cut. The cutting angle of the spacer 171c is preferably made coincide with the angle of the expanding portion of the recess portion 121 as illustrated in FIG. 15. That is, the spacer 171 is preferably cut along the expanding portion of the recess portion 121. If the spacer 171c has the shape as illustrated in FIG. 14, the jetted gas possibly causes the Coand 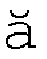 effect due to the presence of the spacer 171. Therefore, there is a possibility that efficient gas jet from the nozzle 111 is interrupted. By having the shape of the spacer 171c as illustrated in FIG. 15, the occurrence of the Coand 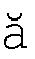 effect is suppressed. That is, the shape of the spacer 171c achieves efficient gas jet.

### [Fifth embodiment]

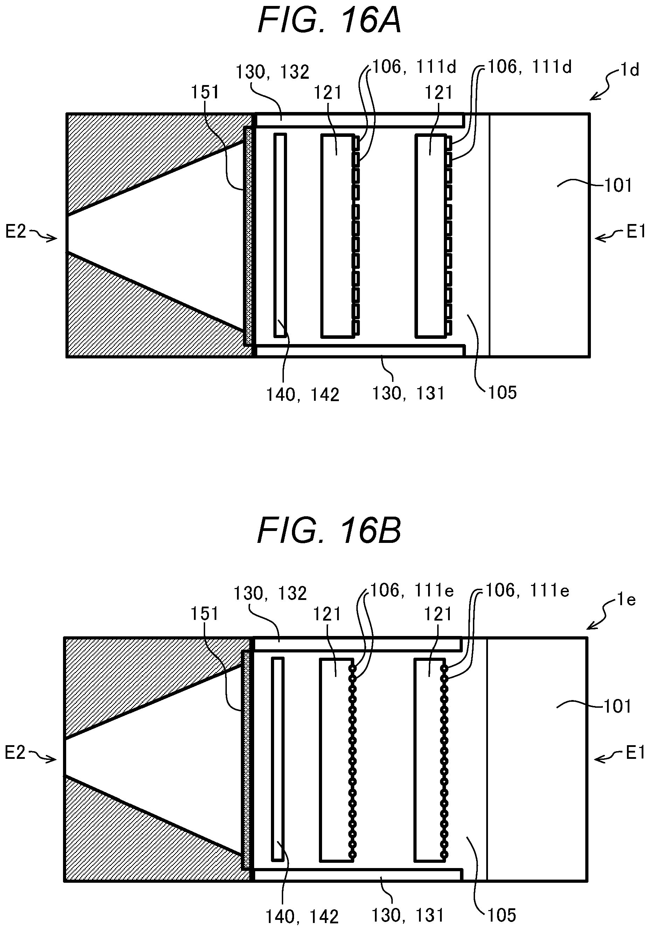

FIGS. 16A and 16B are views illustrating the configurations of attached substance collection devices 1d and 1e according to the fifth embodiment. FIGS. 16A and 16B are cross-sectional views corresponding to FIGS. 1C and 14C.

In the attached substance collection devices 1d and 1e illustrated in FIGS. 16A and 16B, the shape of the nozzle 111 is different from that of the previous embodiments. That is, in the previous embodiments, a slit nozzle that substantially traverses the lower substrate 101 is applied as the nozzle 111, but in the attached substance collection device 1d illustrated in FIG. 16A, small slit nozzles 111d are linearly arrayed so as to traverse the lower substrate 101. In the attached substance collection device 1e illustrated in FIG. 16B, small round nozzles 111e are linearly arrayed so as to traverse the lower substrate 101.

Note that the nozzle 111 may not only have a shape as illustrated in FIG. 1C, FIG. 16A, and FIG. 16B but also have, for example, a plurality of linear slit nozzles arranged so as to substantially traverse the lower substrate 101 in a discontinuous manner.

The characteristic of the present embodiment lies in that the recess portion 121 is provided closer to the collection opening E2 side with respect to the jet opening112 of the nozzle 111 for jetting gas so that the gas efficiently flows toward the inspection object C. Therefore, the shape of the nozzle 111 is not limited to the shape illustrated in the previous embodiments and FIGS. 16A and 16B.

According to the attached substance collection devices 1d and 1e illustrated in FIGS. 16A and 16B, the attached substance collection devices 1d and 1e are configured by using the small slit nozzles 111d and the small round nozzles 111e, which are relatively easily available.

### [Sixth embodiment]

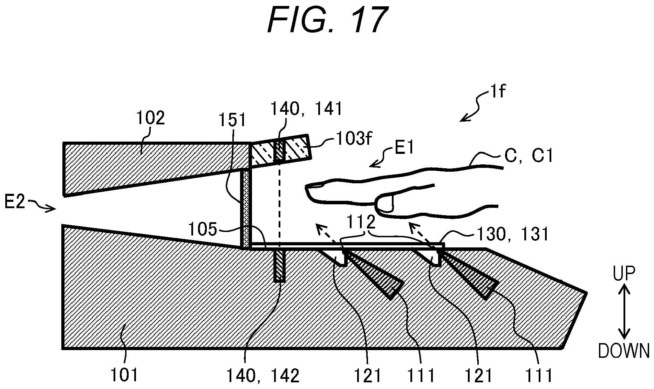

FIG. 17 is a view illustrating the configuration of an attached substance collection device 1f according to the sixth embodiment. FIG. 17 is a cross-sectional view corresponding to FIG. 1B and FIG. 14B.

Comparing the attached substance collection device 1f illustrated in FIG. 17 with the attached substance collection device 1 illustrated in FIG. 1, the length of an upper cover 103f is configured to be short. With such a configuration, in the attached substance collection device 1f, the inspection object C (hand C1) is easily inserted into the attached substance collection device 1f. This achieves improvement in usability. As described in the previous embodiments, if the upper cover 103 has a long configuration, the inspection object C is limited to a size that can be inserted into a gap between the upper cover 103 and the lower substrate 101. However, by shortening the length of the upper cover 103f as illustrated in FIG. 17, the size of the inspection object C is not restricted.

### [Seventh embodiment]

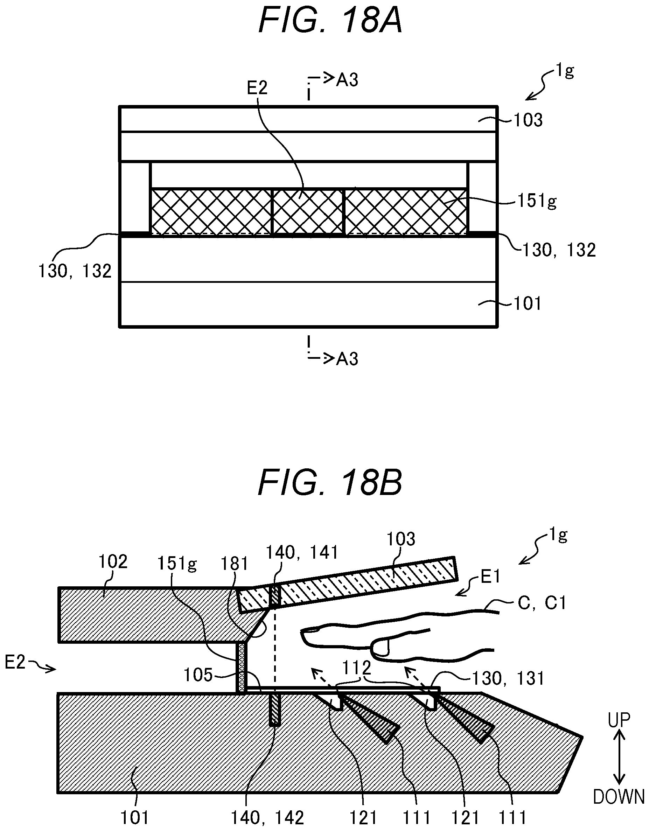

FIGS. 18A and 18B are views illustrating the configuration of an attached substance collection device 1g according to the seventh embodiment. FIG. 18A is a view corresponding to FIG. 1A and FIG. 14A, and FIG. 18B is a cross-sectional view corresponding to FIG. 1B and FIG. 14B. That is, FIG. 18B is an A3-A3 cross-sectional view of FIG. 18A.

In the previous embodiments, the space between the upper substrate 102 and the lower substrate 101 are identical in height with the 0-order filter 151. On the other hand, in the attached substance collection device 1g illustrated in FIG. 18, the height of a 0-order filter 151g is lower than that of the connection portion between the upper cover 103 and the upper substrate 102. That is, the height of the 0-order filter 151g illustrated in FIGS. 18A and 18B is lower than that of the 0-order filter 151 illustrated in the previous embodiments. The gas jetted from the nozzle 111 collides with the lower surface of the inspection object C and flows toward the 0-order filter 151 along the lower surface of the inspection object C. In the previous embodiments, the gas jetted from the nozzle 111 collides with the lower surface of the inspection object C and passes through under the 0-order filter 151. Therefore, the height of the 0-order filter 151 as in the previous embodiments is not necessary, and the height about the 0-order filter 151g illustrated in FIG. 18 is good enough. If the suction flow rate of the cyclone collection unit 221 is the same, the smaller the area of the 0-order filter 151g becomes, the more the gas flow velocity passing through the 0-order filter 151g rises. Accompanying this, the collection rate of the attached substance is improved.

As illustrated in FIG. 18B, an inclination portion 181 is provided from the connection portion between the upper substrate 102 and the upper cover 103 to the 0-order filter 151g. Even in a case where the inspection object C is inserted into the upper part of inside of the attached substance collection device 1g, the gas having collided with the inspection object C is guided to the 0-order filter 151g along the inclination portion 181. Therefore, the collection efficiency of the attached substance can be improved.

### [Eighth embodiment]

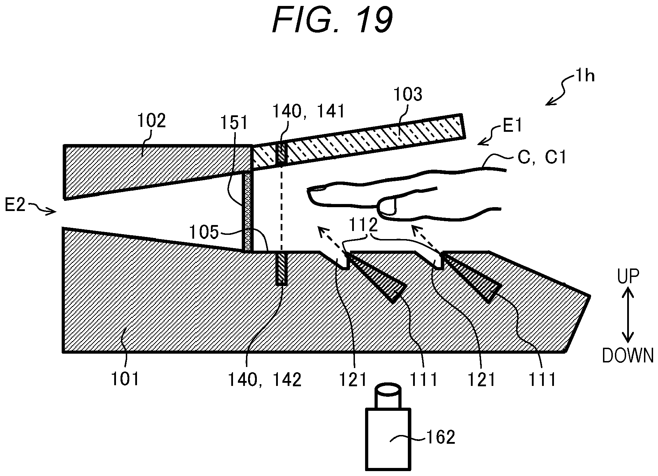

FIG. 19 is a view illustrating the configuration of an attached substance collection device 1h according to the eighth embodiment. FIG. 19 is a cross-sectional view corresponding to FIG. 1B and FIG. 14B.

Unlike that in the previous embodiments, the attached substance collection device 1h illustrated in FIG. 19 is not provided with the contact detection sensor 130, and instead, provided with a distance sensor 162 below the attached substance collection device 1h. That is, the distance sensor 162 detects contact of the inspection object C with the lower substrate 101. Specifically, the distance sensor 162 measures the distance to the inspection object C, and the distance between the inspection object C and the upper surface 105 of the lower substrate 101 is calculated based on the measured distance and the distance known in advance between the distance sensor 162 and the upper surface 105 of the lower substrate 101 (see FIG. 1).

In such a configuration, the lower substrate 101 is desirably made of a transparent member. If the detection of the contact of the inspection object C with the lower substrate 101 by the distance sensor 162 is regarded as "ON" of the contact detection sensor 130 in the previous embodiments, it can be considered as processing similar to that in the previous embodiments. Note that the distance sensor 162 may not necessarily used for contact detection. For example, contact of the inspection object C with the lower substrate 101 may be detected by installing a capacitance sensor on the lower substrate 101 instead of the contact detection sensor 130 or the distance sensor 162.

### [Ninth embodiment]

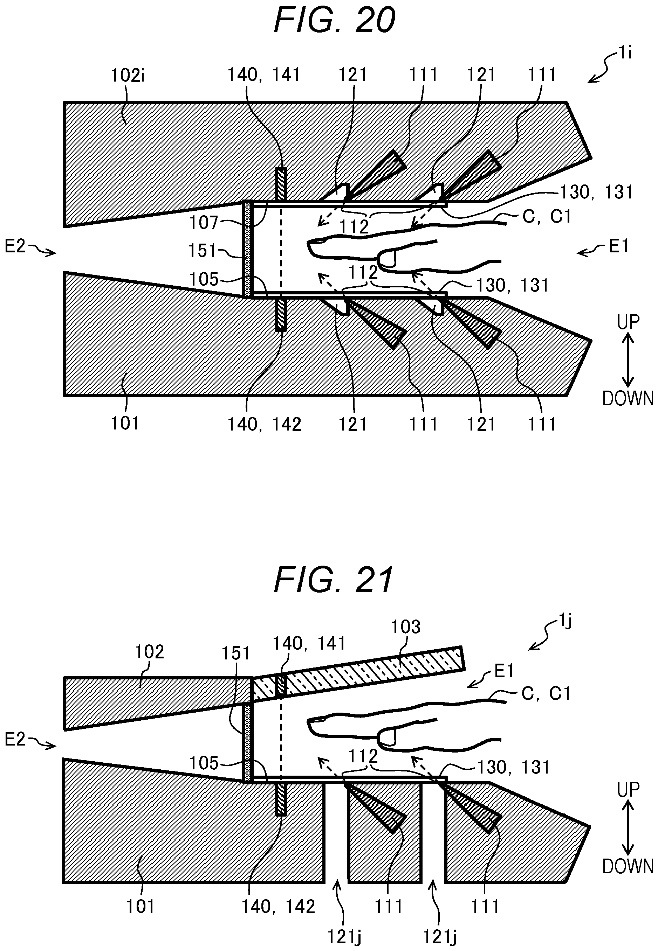

FIG. 20 is a view illustrating the configuration of an attached substance collection device 1i according to the ninth embodiment. FIG. 20 is a cross-sectional view corresponding to FIG. 1B and FIG. 14B.

In the attached substance collection device 1i illustrated in FIG. 20, unlike that in the previous embodiments, an upper substrate 102i extends to the insertion opening E1. The nozzle 111 is provided not only on the lower substrate 101 but also on the upper substrate 102i. That is, the nozzle 111 is installed on the upper surface 105 of the lower substrate 101 and a lower surface 107 of the upper substrate 102i. In comparison with every nozzle 111 on the upper surface 105 and the lower surface 107, the recess portion 121 is provided closer to the collection opening E2 . The contact detection sensor 130 is also provided not only on the lower substrate 101 but also on the upper substrate 102i. Similarly to the previous embodiments, gas is jetted when the insertion detection sensor 140 is "ON" and all the contact detection sensors 130 are "OFF".

However, by changing the operation, unless the inspection object C is in contact with any of the upper substrate 102i and the lower substrate 101, the gas may be jetted to at least a surface of the inspection object C that is not in contact with any of the upper substrate 102i and the lower substrate 101. Therefore, an operation may be carried out in which gas is jetted when any of the contact detection sensors 130 provided in the upper substrate 102i and the lower substrate 101 is "OFF".

With such a configuration, the attached substance on both the upper surface and the lower surface of the inspection object C is detached.

### [Tenth embodiment]

FIG. 21 is a view illustrating the configuration of an attached substance collection device 1j according to the tenth embodiment. FIG. 21 is a cross-sectional view corresponding to FIG. 1B and FIG. 14B.

Unlike that of the previous embodiments, the attached substance collection device 1j illustrated in FIG. 21 is provided with a hole portion 121j penetrating the lower substrate 101 instead of the recess portion 121 as an air flow adjustment portion, i.e. the hole portion 121j, is opened to the atmosphere. The other points are the same as those of the first embodiment. When gas is jetted from the nozzle 111, the pressure around the jetted gas decreases due to the flow velocity of the gas. As a result, a force of sucking air around the gas is generated. When the volume of the space of the recess portion 121 is limited as in the first embodiment, the air in the recess portion 121 is sucked by the jetted gas due to the suction force of the jetted gas. As a result, the inside of the recess portion 121 has a negative pressure. Then, the jetted gas is attracted by the negative pressure of the recess portion 121, and the path of the gas is slightly bent in the direction of the recess portion 121.

On the other hand, by providing the hole portion 121j penetrating the lower substrate 101 as illustrated in FIG. 21, even if the air in the hole portion 121j is sucked by the gas due to the suction force of the jetted gas, the air is supplied from the outside of the attached substance collection device 1j. Therefore, the inside of the hole portion 121j does not have a negative pressure, and the path of the gas does not bend. As a result, the gas appropriately collides with the lower portion of the inspection object C.

The above-described configurations, functions, units, storage device 322, and the like may be implemented by hardware by designing some or all of them with an integrated circuit, for example. As illustrated in FIGS. 4 and 12, the above-described configurations, functions, and the like may be implemented by software by a processor such as the CPU 321 interpreting and executing a program that implements each function. Information such as a program, a table, and a file for implementing each function can be stored in a recording device such as the memory 310 and a solid state drive (SSD), or a recording medium such as an integrated circuit (IC) card, a secure digital (SD) card, and a digital versatile disc (DVD), other than being stored in a hard disk (HD) .

In each embodiment, a control line and an information line that are considered to be necessary for explanation are illustrated, and not necessarily all control lines and information lines on the product are illustrated. In practice, almost all configurations may be considered to be interconnected.

### Reference Signs List

- 1, 1a to 1j: attached substance collection device (attached substance collection unit)
- 101: lower substrate (housing)
- 102: upper substrate (housing)
- 103: upper cover (cover)
- 105: upper surface (surface)
- 106: opening portion
- 107: lower surface
- 111: nozzle
- 111d: small slit nozzle
- 111e: round nozzle
- 111a: first nozzle
- 111b: second nozzle
- 112: jet opening
- 121: recess portion (air flow adjustment portion)
- 121j: hole portion (air flow adjustment portion)
- 130: contact detection sensor (contact detection unit)
- 140: insertion detection sensor (insertion detection unit)
- 151: 0-order filter (filter)
- 161: authentication device
- 171, 171c, 171-1: spacer
- 181: inclination portion
- 200: attached substance analysis system
- 220: concentration device (concentration unit)
- 231: analysis device (analysis unit)
- 300: data processing device
- C: inspection object (object)

## Claims

1. An attached substance collection device, comprising:
a nozzle configured to jet gas upward;
a surface equipped with an opening portion through which the gas jets from the nozzle passes;
a collection opening configured to collect the gas jetted toward an object; and
a contact detection unit configured to detect whether or not the object has come into contact with the surface, wherein
the object has an attached substance attached thereto, and the attached substance is collected by using the gas.

2. The attached substance collection device according to claim 1, wherein
a height of a distal end of the nozzle is substantially equal to a height of the surface; or equal to or less than the height of the surface,
the surface comprises an air flow adjustment portion that is a recess portion or a hole portion, and
relative to a jet opening of the nozzle, the air flow adjustment portion is provided closer to the collection opening, and is in contact with the jet opening of the nozzle or includes the jet opening of the nozzle.

3. An attached substance collection device, comprising:
a nozzle configured to jet gas upward;
a surface equipped with an opening portion through which the gas jetted from the nozzle passes; and
a collection opening configured to collect the gas jetted toward an object, wherein
the object has an attached substance attached thereto, and the attached substance is collected by using the gas,
a height of a distal end of the nozzle is substantially equal toa height of the surface; or equal to or less than a height of the surface,
the surface comprises an air flow adjustment portion that is a recess portion or a hole portion, and
relative to a jet opening of the nozzle, the air flow adjustment portion is provided closer to the collection opening, and is in contact with the jet opening of the nozzle or includes the jet opening of the nozzle.

4. The attached substance collection device according to claim 3, comprising
a contact detection unit configured to detect whether or not the object has come into contact with the surface.

5. The attached substance collection device according to claim 1 or 3, comprising an insertion detection unit configured to detect insertion of the object.

6. The attached substance collection device according to claim 1 or 4, comprising
an insertion detection unit configured to detect insertion of the object,
wherein
in a case where the insertion detection unit has detected insertion of the object and the contact detection unit has not detected contact of the object with a surface, the gas is jetted from the nozzle.

7. The attached substance collection device according to claim 1 or 3, comprising
a cover facing at least a part of the surface,
wherein
the cover is made of a transparent member.

8. The attached substance collection device according to claim 1 or 3, wherein
the nozzle has a width being transverse to a direction from an opening, where the object is inserted, toward the collection opening.

9. The attached substance collection device according to claim 7, comprising:
a filter located between the nozzle and the collection opening; and
an inclination portion extending diagonally upward toward an opening where the object is inserted, and located above the filter.

10. The attached substance collection device according to claim 1 or 3, wherein
a plurality of the nozzles are arrayed so as to be transverse to a direction from an opening, where the object is inserted, toward the collection opening.

11. The attached substance collection device according to claim 1 or 4, comprising
a filter located between the nozzle and the collection port,
wherein
the contact detection unit has a detection region at least between the nozzle and the filter.

12. The attached substance collection device according to claim 2 or 3, wherein
the air flow adjustment portion is a recess portion, and
the recess portion comprises a structure expanding toward the collection opening.

13. The attached substance collection device according to claim 1 or 3, comprising:
a spacer that spaces an object from the surface.

14. An attached substance analysis system, comprising:
an attached substance collection unit that comprises,
a nozzle configured to jet gas upward,
a surface equipped with an opening portion through which the gas jetted from the nozzle passes,
a collection opening configured to collect the gas jetted toward an object, and
a contact detection unit detecting whether or not the object has come into contact with the surface, in which the attached substance collection unit collects an attached substance attached to the object by using the gas; and
an analysis unit connected to the collection opening and configured to analyze the attached substance fed from the collection opening.

15. An attached substance analysis system, comprising:
an attached substance collection device that comprises,
a nozzle configured to jet gas upward
a surface equipped with an opening portion through which the gas jetted from the nozzle passes, and
a collection opening configured to collect the gas jetted toward an object, in which
the attached substance collection device collects an attached substance attached to the object by using the gas,
a height of a distal end of the nozzle is substantially equal to a height of the surface; or equal to or less than a height of the surface,
the surface comprises an air flow adjustment portion that is a recess portion or a hole portion, and
relative to the jet opening of the nozzle, the air flow adjustment portion is provided closer to the collection opening, and is in contact with the jet opening of the nozzle or includes the jet opening of the nozzle; and
an analysis unit connected to the collection opening and configured to analyze the attached substance fed from the collection opening.
